# EUROPEAN PATENT APPLICATION

(11) **EP 4 813 913 A1**
(43) Date of publication of application: **30.09.2026**
(21) Application number: 25874040.6
(22) Date of filing: 24.09.2025
(51) Int. Cl.: C01B 32/174, H01M 4/62

(54) **CARBON NANOTUBE DISPERSION SOLUTION AND PREPARATION METHOD THEREFOR**

(30) Priority: 26.09.2024 KR 20240130426; 23.09.2025 KR 20250137021
(71) Applicant: LG Chem, Ltd., Seoul 07336 (KR)
(72) Inventor: JANG, Youngjin, Seoul 07796 (KR); KIM, Eunbum, Seoul 07796 (KR); CHO, Seung Wook, Seoul 07796 (KR); YOON, Kiyoul, Seoul 07796 (KR)
(74) Representative: Hoffmann Eitle
(86) International application number: PCT/KR2025/014934
(87) International publication number: WO 2026/071686

(57) **Abstract**

A carbon nanotube dispersion comprising carbon nanotubes, a dispersant and a solvent is provided. The dispersant comprises a first dispersant including a vinyl-based polymer including a halogen atom and a second dispersant including a cationic compound including a pyrazine structure. The carbon nanotube dispersion according to one embodiment of the present disclosure can significantly reduce not only an initial viscosity of the carbon nanotube dispersion but also a rate of temporal change in viscosity by including the first dispersant and the second dispersant.

## Description

### [Technical Field]

The present disclosure relates to a carbon nanotube dispersion and a method for preparing the same. More specifically, the present disclosure relates to a carbon nanotube dispersion and a method for preparing the same, in which, in order to improve dispersibility of carbon nanotubes, a carbon nanotube dispersion comprises a first dispersant including a vinyl-based polymer including a halogen atom as a dispersant together with the carbon nanotubes, and a second dispersant including a cationic compound including a pyrazine structure.

This application claims the benefit of priority based on Korean Patent Application No. 10-2024-0130426 filed on September 26, 2024 and Korean Patent Application No. 10-2025-0137021 filed on September 23, 2025, the entire contents of which are incorporated herein by reference as part of the present specification.

### [Background Art]

As technology development and demand for mobile devices increase, demand for secondary batteries as an energy source has rapidly increased. Among such secondary batteries, lithium secondary batteries, which have high energy density and voltage, long cycle life, and low self-discharge rate, have been commercialized and widely used. In addition, as an electrode for such high-capacity lithium secondary batteries, research is actively underway on methods for manufacturing an electrode having higher energy density per unit volume by increasing electrode density.

In general, a high-density electrode is formed by molding electrode active material particles having a size of several µm to several tens of µm by a high-pressure press, and during the molding process, the particles may be deformed and spaces between the particles may be reduced, so that penetration of an electrolyte solution is likely to be deteriorated. In order to solve such a problem, a conductive material having excellent electrical conductivity and strength is used in the manufacture of electrodes. The conductive material is located between electrode active materials and, even when subjected to a molding process, maintains micropores between active material particles so that the electrolyte solution can easily penetrate and, due to its excellent electrical conductivity, can reduce resistance in the electrode. Among such conductive materials, use of carbon nanotubes, which are fibrous carbon-based conductive materials capable of further reducing electrode resistance by forming an electrical conductive path in the electrode, is increasing.

The carbon nanotube is a micro carbon fiber in which carbons connected in a hexagonal ring form a long tubular structure having a diameter of not greater than 1 µm. Due to high conductivity, tensile strength and heat resistance, which are derived from the unique structure of the carbon nanotube, application and commercialization thereof to various fields are expected. In order to commercialize the carbon nanotube as a conductive material, it is necessary to prepare the carbon nanotube in the form of a dispersion, rather than in a powder form. However, due to strong agglomeration of the carbon nanotube, it is difficult to lower the viscosity when preparing a dispersion, and even if the viscosity is lowered, the viscosity rapidly increases with the passage of time, which makes it difficult to apply the dispersion to an actual process.

In order to solve these problems, there has been proposed a method of dispersing carbon nanotubes in a dispersion medium by mechanical dispersion treatment such as ultrasonic treatment. However, in the case of the mechanical dispersion method, there is a problem in that the carbon nanotubes are agglomerated immediately after ultrasonic irradiation is finished. When the carbon nanotubes are agglomerated, coating properties in process steps are deteriorated, or it is difficult to obtain a product having a uniform thickness.

Accordingly, in the relevant technical field, there is demand for a technology of preparing a carbon nanotube dispersion having low viscosity and a low rate of temporal change in viscosity. As a result of continuous research on additives as a means for solving the above-described problems in a carbon nanotube dispersion, the inventor of the present disclosure has completed the present disclosure.

### [Prior Art Documents]

### [Patent Documents]

(Patent Document 1) Korean Patent Publication No. 10-2023-0102774

### [Detailed Description of the Invention]

### [Technical Problem]

The present disclosure is directed to providing a carbon nanotube dispersion and a method for preparing the same, in which a first dispersant including a vinyl-based polymer including a halogen atom as a dispersant and a second dispersant including a cationic compound including a pyrazine structure are used, such that carbon nanotubes are efficiently dispersed.

### [Technical Solution]

According to a first aspect of the present disclosure, the present disclosure provides a carbon nanotube dispersion comprising carbon nanotubes, a dispersant and a solvent, wherein the dispersant comprises a first dispersant including a vinyl-based polymer including a halogen atom, and a second dispersant including a cationic compound including a pyrazine structure.

In one embodiment of the present disclosure, the cationic compound is a compound represented by the following Chemical Formula 1 or 2.

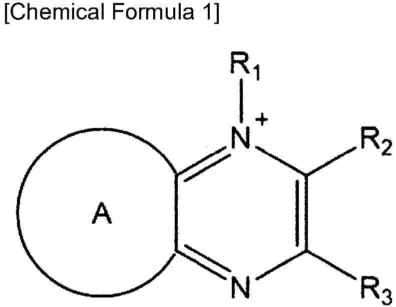

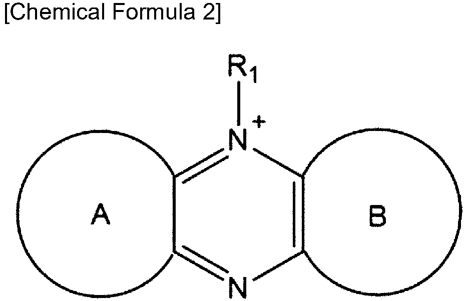

In one embodiment of the present disclosure, Ring A and Ring B are the same as or different from each other and are each independently a substituted or unsubstituted C6 to C20 aryl ring or a substituted or unsubstituted 6- to 20-membered heteroaryl ring.

In one embodiment of the present disclosure, R₁ is selected from the group consisting of hydrogen, a substituted or unsubstituted C1 to C10 alkyl group, a substituted or unsubstituted C1 to C10 alkenyl group, a substituted or unsubstituted C6 to C20 aryl group, and a substituted or unsubstituted 6- to 20-membered heteroaryl group.

In one embodiment of the present disclosure, R₂ and R₃ are the same as or different from each other and are each independently selected from the group consisting of hydrogen, a halogen, a cyano group, a sulfonate group, a hydroxyl group, an amine group, a substituted or unsubstituted C1 to C10 alkyl group, a substituted or unsubstituted C1 to C10 alkenyl group, a substituted or unsubstituted C1 to C10 alkoxy group, a substituted or unsubstituted C6 to C20 aryl group, and a substituted or unsubstituted 6- to 20-membered heteroaryl group.

In one embodiment of the present disclosure, the cationic compound is a compound represented by the following Chemical Formula 3.

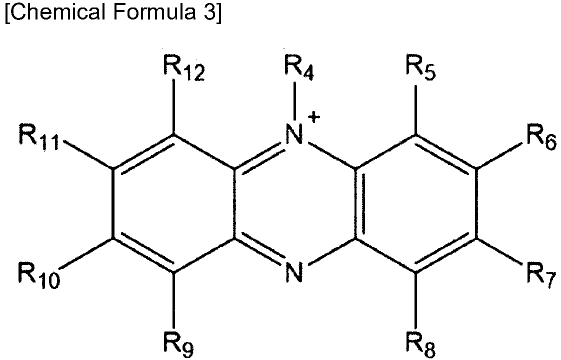

In one embodiment of the present disclosure, R₄ is selected from the group consisting of hydrogen, a substituted or unsubstituted C1 to C10 alkyl group, a substituted or unsubstituted C1 to C10 alkenyl group, a substituted or unsubstituted C6 to C20 aryl group, and a substituted or unsubstituted 6- to 20-membered heteroaryl group.

In one embodiment of the present disclosure, R₅ to R₁₂ are the same as or different from each other and are each independently selected from the group consisting of hydrogen, a halogen, a cyano group, a sulfonate group, a hydroxyl group, an amine group, a substituted or unsubstituted C1 to C10 alkyl group, a substituted or unsubstituted C1 to C10 alkenyl group, a substituted or unsubstituted C1 to C10 alkoxy group, a substituted or unsubstituted C6 to C20 aryl group, and a substituted or unsubstituted 6- to 20-membered heteroaryl group.

In one embodiment of the present disclosure, the cationic compound includes at least one amine group at a position capable of forming an iminium cation by electron transfer.

In one embodiment of the present disclosure, the vinyl-based polymer is selected from the group consisting of polyvinyl fluoride, polyvinylidene fluoride, polyvinylidene fluoride-hexafluoropropylene copolymer, polytetrafluoroethylene, polyethylene tetrafluoroethylene, polychlorotrifluoroethylene, polyethylene chlorotrifluoroethylene, polyvinyl chloride and combinations thereof.

In one embodiment of the present disclosure, the carbon nanotubes are included in an amount of 0.05 wt% to 5 wt% based on the total weight of the carbon nanotube dispersion.

In one embodiment of the present disclosure, the first dispersant is included in an amount of 80 parts by weight to 450 parts by weight, based on 100 parts by weight of the carbon nanotubes, in the carbon nanotube dispersion.

In one embodiment of the present disclosure, the second dispersant is included in an amount of 10 parts by weight to 150 parts by weight, based on 100 parts by weight of the carbon nanotubes, in the carbon nanotube dispersion.

In one embodiment of the present disclosure, the second dispersant is included in an amount of 10 parts by weight to 90 parts by weight, based on 100 parts by weight of the first dispersant, in the carbon nanotube dispersion.

In one embodiment of the present disclosure, the carbon nanotube dispersion has an initial viscosity of 10 Pa·s or less as measured at 25°C and 1 rpm.

In one embodiment of the present disclosure, the carbon nanotube dispersion has a viscosity increase rate of 0.1% to 18%, calculated by the following Equation 1. $Viscosity increase rate \left(%\right) = \left(B-A\right) / A \times 100$ where A is an initial viscosity (Pa·s) measured at 25°C and 1 rpm, and B is a viscosity (Pa·s) measured at 25°C and 1 rpm after standing at 25°C for 1 week.

In one embodiment of the present disclosure, the carbon nanotubes have a BET specific surface area of 800 m²/g to 5000 m²/g.

In one embodiment of the present disclosure, the solvent includes a non-aqueous polar solvent.

According to a second aspect of the present disclosure, the present disclosure provides a method for preparing the above-described carbon nanotube dispersion.

In one embodiment of the present disclosure, the method comprises: (1) preparing a first mixture by mixing a first dispersant, a second dispersant and a solvent; (2) preparing a second mixture by adding carbon nanotubes to the first mixture and mixing; and (3) dispersing the second mixture.

In one embodiment of the present disclosure, in step (3), the second mixture is treated and dispersed 5 to 15 times at a pressure of 5,000 psi to 30,000 psi.

### [Advantageous Effects]

The carbon nanotube dispersion according to one embodiment of the present disclosure employs a first dispersant including a vinyl-based polymer including a halogen atom as a dispersant and a second dispersant including a cationic compound including a pyrazine structure, and thus can effectively disperse carbon nanotubes. The carbon nanotube dispersion not only has a relatively low initial viscosity, but also exhibits a low viscosity increase rate even after 1 week, thereby exhibiting a stable dispersion effect.

### [Best Mode for Carrying Out the Invention]

Embodiments provided according to the present disclosure can all be achieved by the following description. The following description is to be understood as describing preferred embodiments of the present disclosure, and it is to be understood that the present disclosure is not necessarily limited thereto.

For properties described in the present specification, when measurement conditions and methods are not specifically described, the properties are measured according to measurement conditions and methods generally used by those skilled in the art in the relevant technical field.

### <Carbon Nanotube Dispersion>

According to one aspect of the present disclosure, the present disclosure provides a carbon nanotube dispersion comprising carbon nanotubes, a dispersant and a solvent. The carbon nanotubes have high conductivity and can be used as a conductive material for lithium secondary batteries and the like; however, there is a problem in that they are difficult to disperse and thus are difficult to apply to actual processes. In the present disclosure, as dispersants for effectively dispersing carbon nanotubes, a first dispersant including a vinyl-based polymer including a halogen atom, and a second dispersant including a cationic compound including a pyrazine structure are utilized to provide a carbon nanotube dispersion having improved dispersibility of carbon nanotubes.

The carbon nanotubes may be a material generally used as a conductive material in the relevant technical field. The carbon nanotubes may be a secondary structure formed by aggregates in which unit bodies of carbon nanotubes form a bundle type as a whole or in part, and each unit body of the carbon nanotubes has a graphite sheet of a nano-sized-diameter cylinder form and has an sp² bonding structure. At this time, depending on the angle and structure at which the graphite sheet is rolled, the carbon nanotube may exhibit properties of a conductor or a semiconductor. The unit body of the carbon nanotube may be classified into a single-walled carbon nanotube (SWCNT), a double-walled carbon nanotube (DWCNT), and a multi-walled carbon nanotube (MWCNT), depending on the number of walls constituting bonds.

In the present specification, the term "bundle type" refers to, unless otherwise mentioned, a secondary shape in the form of a bundle or rope in which a plurality of unit bodies of carbon nanotubes are arranged such that the axes in the longitudinal direction of the unit bodies are substantially aligned in the same orientation and are arranged in parallel, or are twisted or entangled after being arranged. In addition, the term "non-bundle type" or "entangled type" refers to a form in which unit bodies of carbon nanotubes are entangled without a definite shape such as a bundle or a rope.

The carbon nanotubes have relatively high conductivity, but exhibit high agglomeration due to van der Waals force generated between carbon nanotubes. When the conductive material is agglomerated, it cannot properly form a conductive path, and a relatively large amount of conductive material is used, so that the amount of active material is reduced, and therefore performance of the electrode may be rather deteriorated. Accordingly, there has been difficulty in commercializing carbon nanotubes as a conductive material.

The carbon nanotube dispersion according to the present disclosure comprises a first dispersant including a vinyl-based polymer including a halogen atom and a second dispersant including a cationic compound including a pyrazine structure, and thus can significantly reduce viscosity of an aqueous carbon nanotube dispersion and suppress occurrence of temporal change, thereby, when applied to an electrode slurry for a lithium secondary battery, allowing a high conductivity derived from high conductivity of the carbon nanotubes to be exhibited.

Specifically, when the carbon nanotube dispersion according to the present disclosure is applied to preparation of an electrode slurry, the carbon nanotubes are uniformly located between active materials, and micropores between electrode active materials can be maintained constant even during preparation of an electrode by coating and drying the electrode slurry and then rolling. In addition, since the carbon nanotubes are not agglomerated and are uniformly distributed, a sufficient conductive path can be formed with a small amount of carbon nanotubes.

The carbon nanotube dispersion according to one embodiment of the present disclosure may comprise one or more of single-walled, double-walled and multi-walled carbon nanotube unit bodies as the carbon nanotubes, and specifically may comprise single-walled carbon nanotubes. Since the single-walled carbon nanotubes have a higher specific surface area than double-walled and multi-walled carbon nanotubes, they may help to improve performance of a battery as a conductive material for a lithium secondary battery.

According to one embodiment of the present disclosure, the carbon nanotubes have a diameter of 0.5 nm to 10 nm. Here, the diameter means the largest value among distances from one arbitrary point at the outermost portion based on a circular cross section of the carbon nanotube to another point. The diameter of the carbon nanotubes may be measured by photographing with a scanning electron microscope. Specifically, the diameter of the carbon nanotubes may be 0.5 nm or more, 0.6 nm or more, 0.7 nm or more, 0.8 nm or more, 0.9 nm or more, or 1 nm or more, and may be 10 nm or less, 9 nm or less, 8 nm or less, 7 nm or less, 6 nm or less, or 5 nm or less, and may be 0.5 nm to 10 nm, 0.7 nm to 7 nm, or 1 nm to 5 nm. The carbon nanotubes having a diameter within the above range can be effectively dispersed in an electrode of a lithium secondary battery and impart conductivity to the electrode.

According to one embodiment of the present disclosure, the carbon nanotubes have a length of 1 µm to 20 µm. Here, the length means a height of a cylindrical carbon nanotube. The length of the carbon nanotubes may be measured by photographing with a scanning electron microscope. Specifically, the length of the carbon nanotubes may be 1 µm or more, 2 µm or more, 3 µm or more, 4 µm or more, or 5 µm or more, and may be 20 µm or less, 19 µm or less, 18 µm or less, 17 µm or less, 16 µm or less, or 15 µm or less, and may be 1 µm to 20 µm, 3 µm to 18 µm, or 5 µm to 15 µm. The carbon nanotubes having a length within the above range can effectively connect components in an electrode of a lithium secondary battery and impart conductivity to the electrode.

According to one embodiment of the present disclosure, the carbon nanotubes have a BET specific surface area of 800 m²/g to 5,000 m²/g. The BET specific surface area is a specific surface area measured by the BET method, and specifically, it is preferably a value calculated by obtaining an adsorption amount of nitrogen gas at a liquid nitrogen temperature (77 K) using BELSORP-mini II manufactured by BEL Japan. Specifically, the BET specific surface area of the carbon nanotubes may be 800 m²/g or more, 850 m²/g or more, 900 m²/g or more, 950 m²/g or more, or 1,000 m²/g or more, and may be 5,000 m²/g or less, 4,500 m²/g or less, 4,000 m²/g or less, 3,500 m²/g or less, 3,000 m²/g or less, 2,500 m²/g or less, or 2,000 m²/g or less, and may be 800 m²/g to 5,000 m²/g, 900 m²/g to 3,500 m²/g, or 1,000 m²/g to 2,000 m²/g. The carbon nanotubes having a BET specific surface area within the above range can effectively contact other components in an electrode of a lithium secondary battery and impart conductivity to the electrode.

According to one embodiment of the present disclosure, the carbon nanotubes are included in an amount of 0.05 wt% to 5 wt% based on the total weight of the carbon nanotube dispersion. Specifically, the content of the carbon nanotubes may be 0.05 wt% or more, 0.1 wt% or more, 0.2 wt% or more, 0.3 wt% or more, 0.4 wt% or more, or 0.5 wt% or more, and may be 5 wt% or less, 4.5 wt% or less, 4 wt% or less, 3.5 wt% or less, 3 wt% or less, 2.5 wt% or less, or 2 wt% or less, or 1.5 wt% or less, and may be 0.05 wt% to 5 wt%, 0.1 wt% to 3 wt%, or 0.5 wt% to 1.5 wt%. When the carbon nanotubes in the carbon nanotube dispersion are adjusted within the above-described range, the carbon nanotubes can be effectively dispersed, and applicability to a lithium secondary battery can be improved.

The carbon nanotube dispersion according to one embodiment of the present disclosure comprises, in addition to the solvent, a first dispersant and a second dispersant in order to effectively disperse the above-described carbon nanotubes. Since the carbon nanotube dispersion has a relatively high content of carbon nanotubes, in order to prevent the carbon nanotubes from being agglomerated and to effectively disperse the carbon nanotubes to increase utility value, it may be important to appropriately combine components other than the carbon nanotubes. On the other hand, if the content of carbon nanotubes is low, a solid content of the prepared electrode slurry decreases during preparation of an electrode slurry, and an electrode slurry before drying may become unnecessarily thick, which may lead to deterioration in quality of the electrode after drying.

The solvent basically serves to disperse the carbon nanotubes, the first dispersant and the second dispersant. Although the carbon nanotubes are used as a conductive material in actual products such as lithium secondary batteries, when the carbon nanotubes in a powder state are directly added to an electrode slurry, the carbon nanotubes are agglomerated and cannot exhibit proper functionality in the electrode. In order to solve this problem, the carbon nanotubes are pre-dispersed and supplied as a carbon nanotube dispersion.

The solvent is not particularly limited as long as it can effectively disperse the carbon nanotubes, the first dispersant and the second dispersant. According to one embodiment of the present disclosure, the solvent includes a non-aqueous polar solvent. The non-aqueous polar solvent may include a functional group including a nitrogen atom, and specifically may include a functional group selected from the group consisting of a cyano group, an amine group and an amide group. The non-aqueous polar solvent may be, for example, selected from the group consisting of dimethylformamide (DMF), acetonitrile, dimethylacetamide (DMAc), N,N-dimethylpropionamide (DMPA), N-methylformamide (NMF), formamide, N,N-diethylformamide (DEF), 2-pyrrolidone, N-methyl-2-pyrrolidone (NMP), N-ethyl-2-pyrrolidone (NEP), ε-caprolactam, benzonitrile, propionitrile, butyronitrile and combinations thereof, but is not necessarily limited thereto.

The non-aqueous polar solvent may be included in such an amount that an electrode slurry composition prepared using the carbon nanotube dispersion has an appropriate viscosity in consideration of coating properties of the electrode slurry composition prepared using the carbon nanotube dispersion. In the present specification, even if the content of the solvent is not specified in detail, the content of the solvent may be the content of the solvent when the contents of the carbon nanotubes, the first dispersant and the second dispersant in the carbon nanotube dispersion are excluded.

The carbon nanotube dispersion according to one embodiment of the present disclosure further comprises a dispersant because the carbon nanotubes cannot be effectively dispersed by the solvent alone. A single material may be used as the dispersant, but two or more materials may be used in combination. According to one embodiment of the present disclosure, the dispersant comprises the first dispersant and the second dispersant. The first dispersant and the second dispersant may be distinguished depending on the amounts used, and the dispersant used in a larger amount among the two dispersants may be the first dispersant.

According to one embodiment of the present disclosure, the first dispersant includes a vinyl-based polymer including a halogen atom. The vinyl-based polymer refers to a polymer that undergoes addition polymerization through a double bond in an ethylene monomer as a basic structure. At this time, the ethylene monomer may be substituted with various functional groups, and in one embodiment of the present disclosure, the vinyl-based polymer including a halogen atom may be in a form in which an ethylene polymer is substituted with a halogen, a haloalkyl, a haloaryl, and the like. The vinyl-based polymer may be, for example, selected from the group consisting of polyvinyl fluoride, polyvinylidene fluoride, polyvinylidene fluoride-hexafluoropropylene copolymer, polytetrafluoroethylene, polyethylene tetrafluoroethylene, polychlorotrifluoroethylene, polyethylene chlorotrifluoroethylene, polyvinyl chloride and combinations thereof, but is not necessarily limited thereto.

The second dispersant may be a material that can exhibit a synergistic effect in dispersion of carbon nanotubes when used together with the above-described first dispersant. According to one embodiment of the present disclosure, the second dispersant includes a second dispersant comprising a cationic compound including a pyrazine structure. When the first dispersant is used together with the second dispersant, compared to a case in which only the first dispersant is used in the related art, dispersibility is excellent, so that agglomeration of particles in a slurry composition is reduced and a sedimentation rate is low.

Since the second dispersant comprises a cationic compound including a pyrazine structure, the second dispersant has a relatively low molecular weight and a small molecular size, and thus can be adsorbed to a conductive material not wrapped by the first dispersant, thereby providing an additional dispersion effect. The pyrazine structure included in the second dispersant can increase binding force between the dispersant and the carbon nanotubes by stably causing ₁₁-_{TT} interaction with the carbon nanotubes in a local region. Accordingly, the content of residual dispersant that is not effectively adsorbed to the surface of the carbon nanotubes can be reduced to prevent agglomeration between the residual dispersants. In addition, since the second dispersant includes a cationic compound, an electrostatic repulsive force is formed between ions in the dispersion, thereby preventing agglomeration between adjacent dispersants, and a "carbon nanotube-dispersant" complex can maintain a stable dispersed state in the dispersion.

The pyrazine included in the cationic compound is an aromatic ring compound including two nitrogen atoms and has the following structure.

### [Pyrazine structure]

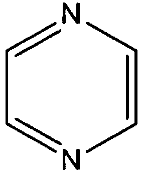

In one embodiment of the present disclosure, the cationic compound becomes cationic when a substituent such as an alkyl or aryl is substituted at one or more of the two nitrogens included in the pyrazine structure. When a substituent is substituted at one nitrogen, a monovalent cationic compound is obtained, and when substituents are substituted at two nitrogens, a divalent cationic compound may be obtained.

In defining the cationic compound according to one embodiment of the present disclosure, terms used in the present specification may be defined as follows.

The term "Cn1 to Cn2" used in the present specification means that a number of carbons in a functional group is from n1 to n2.

The term "alkyl" used in the present specification means a straight-chain or branched saturated hydrocarbon including one radical, and one radical determines a bonding position as a functional group, and the bonding position is not particularly limited. Examples of the term "alkyl" include, but are not necessarily limited to, methyl, ethyl, n-propyl, i-propyl, n-butyl, i-butyl, t-butyl, n-pentyl, i-pentyl and hexyl.

The term "alkenyl" used in the present specification means a straight-chain or branched hydrocarbon including one radical and having one or more carbon-carbon double bonds, and one radical determines a bonding position as a functional group, and the bonding position is not particularly limited. Examples of the term "alkenyl" include, but are not necessarily limited to, ethenyl and propenyl.

The term "halogen" used in the present specification means fluorine (F), chlorine (Cl), bromine (Br) or iodine (I).

The term "n1-membered to n2-membered" used in the present specification means that the sum of a number of carbons and a number of hetero atoms is from n1 to n2. Although a hetero atom is broadly a different element other than carbon, in the present specification, the term "n1-membered to n2-membered" is used before a cyclic functional group and means a number of atoms forming a ring.

The term "aryl" used in the present specification means an aromatic carbocyclic ring hydrocarbon including one radical and having one or more rings, and one radical determines a bonding position as a functional group, and the bonding position is not particularly limited. Examples of the term "aryl" include, but are not necessarily limited to, phenyl and naphthyl. The term "aryl ring" used in the present specification is sometimes used separately to refer to an aromatic carbocyclic ring hydrocarbon not including a separate radical.

The term "heteroaryl" used in the present specification means an aromatic carbocyclic ring hydrocarbon including one radical, having one or more rings, and having one or more hetero atoms in the ring, and one radical determines a bonding position as a functional group, and the bonding position is not particularly limited. The hetero atom may be one capable of forming a ring, and examples thereof include O, N and S. Examples of the term "heteroaryl" include, but are not necessarily limited to, pyrrolyl, furanyl and pyrazinyl. The term "heteroaryl ring" used in the present specification is sometimes used separately to refer to an aromatic carbocyclic ring hydrocarbon including a hetero atom and not including a separate radical.

The term "alkoxy" used in the present specification means a functional group of the form -ORa, in which Ra is the above-described alkyl. Examples of the term "alkoxy" include, but are not necessarily limited to, methoxy, difluoromethoxy, trifluoromethoxy, ethoxy, n-propoxy, isopropoxy, n-butoxy and t-butoxy.

The term "hydroxy" used in the present specification means a functional group of the form -OH.

The term "sulfonate" used in the present specification means a functional group of the form -SO3H.

The term "cyano" used in the present specification means a functional group of the form -CN.

The term "amine" used in the present specification means a functional group including one of -NH₂, -N(R)H, -N(R)₂, -L-NH₂, -L-N(R)H, and -L-N(R)₂. Here, R may be an alkyl, alkenyl, aryl, heteroaryl, and the like, and L may be an alkylene, alkenylene, and the like. The term "amine" is sometimes named as "amino" on the basis of nitrogen. For example, -N(CH₃)₂ may be named dimethylamino.

According to one embodiment of the present disclosure, the cationic compound is a compound represented by the following Chemical Formula 1 or 2.

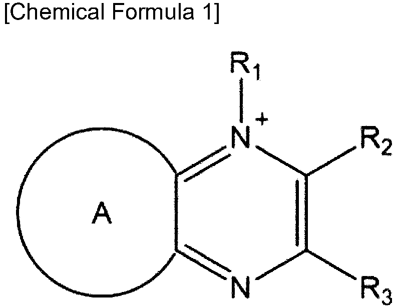

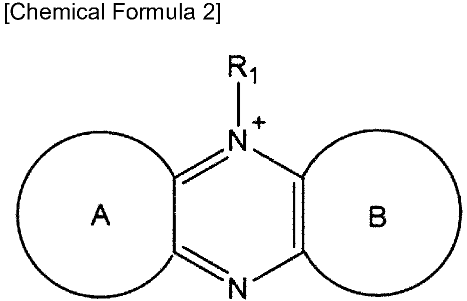

In Chemical Formula 1 or 2,
Ring A and Ring B are the same as or different from each other and are each independently a substituted or unsubstituted C6 to C20 aryl ring or a substituted or unsubstituted 6- to 20-membered heteroaryl ring. Specifically, Ring A and Ring B are the same as or different from each other and are each independently a substituted or unsubstituted C6 to C14 or C6 to C10 aryl ring, or a substituted or unsubstituted 6- to 14-membered or 6- to 10-membered heteroaryl ring. More specifically, Ring A and Ring B are the same as or different from each other and are each independently substituted or unsubstituted benzene or substituted or unsubstituted naphthalene.

R₁ is selected from the group consisting of hydrogen, a substituted or unsubstituted C1 to C10 alkyl group, a substituted or unsubstituted C1 to C10 alkenyl group, a substituted or unsubstituted C6 to C20 aryl group, and a substituted or unsubstituted 6- to 20-membered heteroaryl group. Specifically, R1 is selected from the group consisting of a substituted or unsubstituted C1 to C8 or C1 to C4 alkyl group, a substituted or unsubstituted C1 to C8 or C1 to C4 alkenyl group, a substituted or unsubstituted C6 to C14 or C6 to C10 aryl group, and a substituted or unsubstituted 6- to 14-membered or 6- to 10-membered heteroaryl group. More specifically, R₁ is substituted or unsubstituted benzene or substituted or unsubstituted naphthalene.

R₂ and R₃ are the same as or different from each other and are each independently selected from the group consisting of hydrogen, a halogen, a cyano group, a sulfonate group, a hydroxyl group, an amine group, a substituted or unsubstituted C1 to C10 alkyl group, a substituted or unsubstituted C1 to C10 alkenyl group, a substituted or unsubstituted C1 to C10 alkoxy group, a substituted or unsubstituted C6 to C20 aryl group, and a substituted or unsubstituted 6- to 20-membered heteroaryl group. Specifically, R₂ and R₃ are the same as or different from each other and are each independently selected from the group consisting of hydrogen, a halogen, a cyano group, a sulfonate group, a hydroxyl group, an amine group, a substituted or unsubstituted C1 to C8 or C1 to C4 alkyl group, a substituted or unsubstituted C1 to C8 or C1 to C4 alkenyl group, and a substituted or unsubstituted C1 to C8 or C1 to C4 alkoxy group. More specifically, R₂ and R₃ are the same as or different from each other and are each independently selected from the group consisting of hydrogen, a C1 to C4 alkyl group, an amino group, a C1 to C4 alkylamino group, and a C1 to C4 dialkylamino group.

According to one embodiment of the present disclosure, the cationic compound is a compound represented by the following Chemical Formula 3.

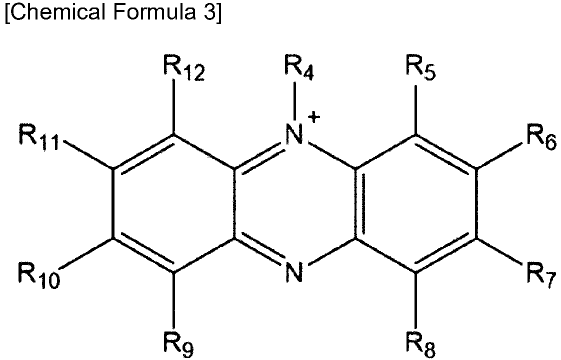

In Chemical Formula 3,
R₄ may be defined as R₁ in Chemical Formulae 1 and 2, and R₅ to R₁₂ may be defined as R₂ and R₃ in Chemical Formulae 1 and 2.

In defining Ring A and Ring B and R₁ to R₁₂ in Chemical Formulae 1 to 3, the term "substituted" means that the structure can be easily modified within a range understandable to those skilled in the art by substituting halogen, hydroxy, cyano, nitro, amino, C1 to C4 alkyl, C1 to C4 alkenyl, and the like.

The cationic compound can be transformed into various forms by electron transfer. At this time, if a cation in the pyrazine structure can easily move to another position by electron transfer, functionality of the cationic compound in carbon nanotube dispersion can be further improved. According to one embodiment of the present disclosure, the cationic compound includes at least one amine group at a position capable of forming an iminium cation by electron transfer. For example, Basic Red 2, which is a cationic compound according to one embodiment of the present disclosure, includes two amine groups at positions capable of forming an iminium cation by electron transfer.

### [Example of electron transfer of Basic Red 2 structure]

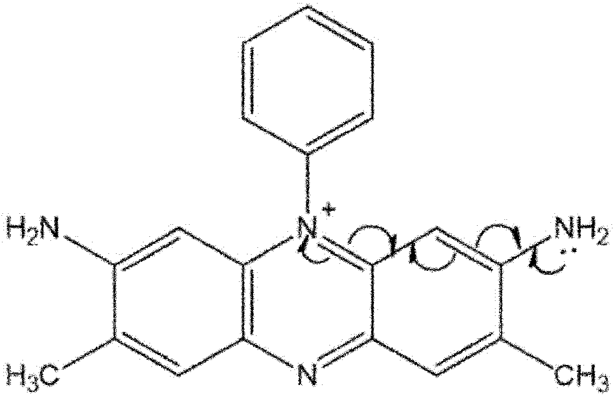

When the above-described dispersants are used in an appropriate ratio, the content of carbon nanotubes can be increased and the carbon nanotubes can be effectively dispersed in the carbon nanotube dispersion. According to one embodiment of the present disclosure, the dispersant is included in an amount of 100 parts by weight to 500 parts by weight, based on 100 parts by weight of the carbon nanotubes, in the carbon nanotube dispersion. Here, the content of the dispersant means the sum of the content of the first dispersant and the content of the second dispersant. Specifically, the content of the dispersant may be 100 parts by weight or more, 110 parts by weight or more, 120 parts by weight or more, 130 parts by weight or more, 140 parts by weight or more, or 150 parts by weight or more, and may be 500 parts by weight or less, 400 parts by weight or less, 300 parts by weight or less, 290 parts by weight or less, 280 parts by weight or less, 270 parts by weight or less, 260 parts by weight or less, or 250 parts by weight or less, and may be 100 parts by weight to 500 parts by weight, 130 parts by weight to 400 parts by weight, or 150 parts by weight to 300 parts by weight. By adjusting the content of the dispersant to the above-described ratio, the carbon nanotubes can be effectively dispersed without excessively increasing the content of the dispersant.

According to one embodiment of the present disclosure, the first dispersant is included in an amount of 80 parts by weight to 450 parts by weight, based on 100 parts by weight of the carbon nanotubes, in the carbon nanotube dispersion. Specifically, the content of the first dispersant may be 80 parts by weight or more, 90 parts by weight or more, 100 parts by weight or more, 110 parts by weight or more, 120 parts by weight or more, 130 parts by weight or more, 140 parts by weight or more, or 150 parts by weight or more, and may be 450 parts by weight or less, 400 parts by weight or less, 350 parts by weight or less, 300 parts by weight or less, 250 parts by weight or less, or 200 parts by weight or less, and may be 80 parts by weight to 450 parts by weight, 100 parts by weight to 300 parts by weight, or 150 parts by weight to 250 parts by weight. By adjusting the content of the first dispersant to the above-described ratio, when appropriately combined with the second dispersant, functionality of the first dispersant can be effectively exhibited.

According to one embodiment of the present disclosure, the second dispersant is included in an amount of 10 parts by weight to 150 parts by weight, based on 100 parts by weight of the carbon nanotubes, in the carbon nanotube dispersion. Specifically, the content of the second dispersant may be 10 parts by weight or more, 20 parts by weight or more, 30 parts by weight or more, 40 parts by weight or more, or 50 parts by weight or more, and may be 150 parts by weight or less, 140 parts by weight or less, 130 parts by weight or less, 120 parts by weight or less, 110 parts by weight or less, or 100 parts by weight or less, and may be 10 parts by weight to 150 parts by weight, 30 parts by weight to 130 parts by weight, or 50 parts by weight to 100 parts by weight. By adjusting the content of the second dispersant to the above-described ratio, when appropriately combined with the first dispersant, functionality of the second dispersant can be effectively exhibited.

According to one embodiment of the present disclosure, the second dispersant is included in an amount of 10 parts by weight to 90 parts by weight, based on 100 parts by weight of the first dispersant, in the carbon nanotube dispersion. As described above, since the designation of the first dispersant and the second dispersant is based on the content of the dispersants, the content of the first dispersant may basically be equal to or greater than the content of the second dispersant. Specifically, the content of the second dispersant may be 10 parts by weight or more, 15 parts by weight or more, 20 parts by weight or more, or 25 parts by weight or more, and may be 90 parts by weight or less, 80 parts by weight or less, 70 parts by weight or less, 60 parts by weight or less, or 50 parts by weight or less, and may be 10 parts by weight to 90 parts by weight, 15 parts by weight to 70 parts by weight, or 20 parts by weight to 50 parts by weight. When the first dispersant and the second dispersant are used in combination in the above-described ratio, carbon nanotubes can be effectively dispersed at the same total amount of dispersant.

The carbon nanotube dispersion according to the present disclosure has excellent dispersibility for carbon nanotubes. Such dispersibility can be confirmed through viscosity of the carbon nanotube dispersion. According to one embodiment of the present disclosure, the carbon nanotube dispersion has an initial viscosity of 10.000 Pa·s or less as measured at 25°C and 1 rpm. Here, the initial viscosity means a value of viscosity measured immediately after the carbon nanotube dispersion is prepared after dispersion of a mixture is completed. A specific method for measuring viscosity may follow the method described in Examples below. The initial viscosity may be 10.000 Pa·s or less, 9.500 Pa·s or less, 9.000 Pa·s or less, or 8.500 Pa·s or less. Since there is a limit in lowering viscosity while including a certain amount of carbon nanotubes in the carbon nanotube dispersion, a lower limit may not be particularly important. The lower limit of the initial viscosity may be, for example, 3.000 Pa·s or more, 3.500 Pa·s or more, 4.000 Pa·s or more, 4.500 Pa·s or more, or 5.000 Pa·s or more.

According to one embodiment of the present disclosure, the carbon nanotube dispersion has a viscosity increase rate of 0.1% to 18%. The viscosity increase rate is calculated by the following Equation 1. $Viscosity increase rate \left(%\right) = \left(B-A\right) / A \times 100$ where A is an initial viscosity (Pa·s) measured at 25°C and 1 rpm, and B is a viscosity (Pa·s) measured at 25°C and 1 rpm after standing at 25°C for 1 week. Specifically, the viscosity increase rate may be 0.1% or more, 0.5% or more, or 1.0% or more, and may be 18% or less, 17% or less, 16% or less, or 15% or less.

As described above, the carbon nanotube dispersion according to one embodiment of the present disclosure not only has a low initial viscosity, but also has a small change in viscosity even after being stored for a certain period of time, and thus has stable dispersibility.

### <Method for Preparing Carbon Nanotube Dispersion>

According to one aspect of the present disclosure, the present disclosure provides a method for preparing the above-described carbon nanotube dispersion. The method for preparing a carbon nanotube dispersion according to one embodiment of the present disclosure comprises: (1) preparing a first mixture by mixing a first dispersant, a second dispersant and a solvent; (2) preparing a second mixture by adding carbon nanotubes to the first mixture and mixing; and (3) dispersing the second mixture.

In steps (1) and (2), mixing may be performed at a temperature condition under which a property such as viscosity of the mixture does not change due to evaporation of the solvent. For example, mixing may be performed at a temperature of 50°C or less, specifically 5°C to 50°C. Mixing may be performed by an impeller, milling, and the like, and the milling may be performed by using, for example, a ball mill, a bead mill, a disc mill or a basket mill, and specifically may be performed by a disc mill.

In step (2), since carbon nanotubes are added, mixing in step (2) may be performed under more severe conditions than mixing in step (1). During milling by a disc mill, the size of beads may be appropriately determined depending on the type and amount of carbon nanotubes and the type of dispersant, and specifically, a diameter of the beads may be 0.1 mm to 5 mm and more specifically 0.5 mm to 4 mm. In addition, the bead milling process may be performed at a speed of 1,000 rpm to 10,000 rpm, and more specifically at a speed of 2,000 rpm to 9,000 rpm. The mixing process may be performed depending on a degree of dispersion of the carbon nanotube dispersion, and specifically may be performed for 30 minutes to 120 minutes, and more specifically for 60 minutes to 90 minutes.

In step (3), the second mixture may be dispersed by a high pressure homogenizer. The dispersion by the high-pressure homogenizer is performed by, for example, pressurizing the mixture with a plunger pump of a high pressure homogenizer and forcing the mixture through a gap of a valve for homogenization, and then applying forces such as cavitation, shear, impact and explosion when passing through the gap. According to one embodiment of the present disclosure, in step (3), the second mixture is treated 5 to 15 times, 6 to 14 times, or 7 to 13 times at a pressure of 5,000 psi to 30,000 psi, 10,000 psi to 30,000 psi, or 15,000 psi to 25,000 psi to be dispersed.

### <Electrode Slurry Composition>

According to one aspect of the present disclosure, the present disclosure provides an electrode slurry composition for a lithium secondary battery comprising the carbon nanotube dispersion and an electrode active material. The electrode slurry composition for a lithium secondary battery may be a positive electrode slurry composition or a negative electrode slurry composition, and specifically may be a positive electrode slurry composition. The electrode slurry composition for a lithium secondary battery may comprise the carbon nanotube dispersion, a positive electrode active material or a negative electrode active material as an electrode active material, a binder, and optionally a solvent and/or other additives.

As the positive electrode active material, well-known positive electrode active materials in the relevant technical field may be used without limitation, and for example, lithium cobalt-based oxides, lithium nickel-based oxides, lithium manganese-based oxides, lithium iron phosphate, lithium nickel manganese cobalt-based oxides, or combinations thereof may be used. Specifically, LiCoO₂, LiNiO₂, LiMn₂O₄, LiCoPO₄, LiFePO₄, and LiNiₐMn_{b}Co_{c}O₂ (where 0 < a, b, c < 1) may be used as the positive electrode active material, but the present disclosure is not limited thereto.

As the negative electrode active material, there may be mentioned one or two or more negative electrode active materials selected from the group consisting of natural graphite, artificial graphite, carbon-based materials; lithium-containing titanium composite oxide (LTO), metals (Me) such as Si, Sn, Li, Zn, Mg, Cd, Ce, Ni or Fe; alloys composed of the metals (Me); oxides (MeOₓ) of the metals (Me); and composites of the metals (Me) and carbon. The negative electrode active material may be included in an amount of 60 wt% to 98 wt%, and more preferably 70 wt% to 98 wt%, based on the total weight of solids excluding the solvent in the negative electrode slurry.

The binder is a component that assists in binding of the active material and conductive material and binding to a current collector, and is typically added in an amount of 1 wt% to 30 wt% based on the total weight of a mixture comprising the electrode active material. Examples of such binders include polyvinylidene fluoride, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene terpolymer (EPDM), sulfonated EPDM, styrene-butadiene rubber, fluororubber, and various copolymers. The carbon nanotube dispersion according to one embodiment of the present disclosure has excellent compatibility with the above-described binders.

As the solvent, organic solvents such as N-methylpyrrolidone (NMP), dimethylformamide (DMF), acetone and dimethylacetamide, or water may be used, and these solvents may be used alone or in a mixture of two or more thereof. The amount of the solvent may be sufficient to dissolve and disperse the electrode active material, binder and conductive material in consideration of a coating thickness of a slurry and a production yield.

As the viscosity adjusting agent, carboxymethyl cellulose or polyacrylic acid may be used, and the viscosity of the electrode slurry may be adjusted by the addition of viscosity adjusting agent so that preparation of the electrode slurry and coating of the electrode slurry on the electrode current collector can be easily performed.

The filler is a component that suppresses expansion of the electrode and may be selectively used, and is not particularly limited as long as it is a fibrous material that does not cause chemical changes in the relevant battery. For example, fibrous materials such as olefinbased polymers such as polyethylene and polypropylene, glass fibers, and carbon fibers may be used.

When the electrode slurry composition is a positive electrode slurry composition for forming a positive electrode, the positive electrode may be prepared by coating the positive electrode slurry composition on a positive electrode current collector, and then drying and rolling. Alternatively, a film obtained by casting the positive electrode slurry on a separate support and then peeling the film from the support may be laminated on the positive electrode current collector to prepare the positive electrode.

The thickness of a positive electrode active material layer formed by the positive electrode slurry may vary depending on a loading amount and a loading speed for coating the positive electrode slurry.

The positive electrode current collector generally has a thickness of 3 µm to 500 µm. The positive electrode current collector is not particularly limited as long as it has high conductivity and does not cause chemical changes in the relevant battery. For example, stainless steel, aluminum, nickel, titanium, calcined carbon, or a surface-treated material in which the surface of aluminum or stainless steel is treated with carbon, nickel, titanium or silver may be used. In addition, fine unevenness may be formed on the surface of the positive electrode current collector to enhance binding force of the positive electrode active material, and various forms such as a film, sheet, foil, net, porous body, foam, nonwoven fabric and the like may be used.

When the electrode slurry composition is a negative electrode slurry composition for forming a negative electrode, the negative electrode may be prepared by coating the negative electrode slurry composition on a negative electrode current collector, and then drying and rolling. Alternatively, a film obtained by casting the negative electrode slurry on a separate support and then peeling the film from the support may be laminated on the negative electrode current collector to prepare the negative electrode.

The thickness of a negative electrode active material layer formed by the negative electrode slurry may vary depending on a loading amount and a loading speed for coating the negative electrode slurry.

The negative electrode current collector generally has a thickness of 3 µm to 500 µm. The negative electrode current collector is not particularly limited as long as it has high conductivity and does not cause chemical changes in the relevant battery. For example, copper, stainless steel, aluminum, nickel, titanium, calcined carbon, a surface-treated material in which the surface of copper or stainless steel is treated with carbon, nickel, titanium or silver, and aluminum-cadmium alloy may be used. In addition, as with the positive electrode current collector, fine unevenness may be formed on the surface to enhance binding force of the negative electrode active material, and various forms such as a film, sheet, foil, net, porous body, foam, nonwoven fabric and the like may be used.

### <Lithium Secondary Battery>

According to one aspect of the present disclosure, the present disclosure provides a lithium secondary battery comprising a positive electrode, a negative electrode, a separator disposed between the positive electrode and the negative electrode, and an electrolyte, using the above-described carbon nanotube dispersion. Since the positive electrode and the negative electrode are the same as those described above, detailed description thereof will be omitted.

The separator separates the negative electrode and the positive electrode and provides a passage for movement of lithium ions, and may be used without particular limitation as long as it is a separator typically used in lithium secondary batteries, and preferably has low resistance to ion movement of the electrolyte and excellent electrolyte impregnation ability. Specifically, a porous polymer film, for example, a porous polymer film made of a polyolefinbased polymer such as an ethylene homopolymer, a propylene homopolymer, an ethylene/butene copolymer, an ethylene/hexene copolymer and an ethylene/methacrylate copolymer, or a multilayered structure of two or more of these films may be used. In addition, a typical porous nonwoven fabric, for example, a nonwoven fabric made of high-melting-point glass fibers, polyethylene terephthalate fibers, and the like may be used. A coated separator including a ceramic component or a polymer material may also be used to secure heat resistance or mechanical strength, and may be used in a single-layer or multi-layer structure as desired.

The electrolyte may be, but is not limited to, an organic liquid electrolyte, an inorganic liquid electrolyte, a solid polymer electrolyte, a gel polymer electrolyte, a solid inorganic electrolyte, a molten inorganic electrolyte, and the like, which can be used in the manufacture of a lithium secondary battery. Specifically, the electrolyte may comprise an organic solvent and a lithium salt.

The organic solvent may be used without particular limitation as long as it can serve as a medium through which ions involved in an electrochemical reaction of the battery can move. Specifically, examples of the organic solvent include ester-based solvents such as methyl acetate, ethyl acetate, γ-butyrolactone and ε-caprolactone; ether-based solvents such as dibutyl ether and tetrahydrofuran; ketone-based solvents such as cyclohexanone; aromatic hydrocarbon-based solvents such as benzene and fluorobenzene; carbonate-based solvents such as dimethyl carbonate (DMC), diethyl carbonate (DEC), methylethyl carbonate (MEC), ethylmethyl carbonate (EMC), ethylene carbonate (EC) and propylene carbonate (PC); alcoholbased solvents such as ethyl alcohol and isopropyl alcohol; nitriles such as R-CN (where R is a C2 to C20 straight-chain, branched or ring hydrocarbon group, and may include a double bond aromatic ring or an ether bond); amides such as dimethylformamide; dioxolanes such as 1,3-dioxolane; and sulfolanes. Among these, carbonate-based solvents are preferred, and a mixture of a cyclic carbonate having high ion conductivity and high dielectric constant, such as ethylene carbonate or propylene carbonate, and a low-viscosity linear carbonate compound, such as ethylmethyl carbonate, dimethyl carbonate or diethyl carbonate, is more preferred because it may have improved charge/discharge performance of a battery. In this case, the cyclic carbonate and the linear carbonate may be mixed at a volume ratio of approximately 1:1 to approximately 1:9, such that performance of the electrolyte may be excellent.

The lithium salt is not particularly limited as long as it is a compound capable of providing lithium ions used in a lithium secondary battery. Specifically, the lithium salt may be selected from the group consisting of LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, and LiB(C₂O₄)₂. The concentration of the lithium salt is preferably within a range of 0.1 M to 2.0 M. When the concentration of the lithium salt is within the above range, the electrolyte may have an appropriate conductivity and viscosity, thereby exhibiting excellent electrolyte performance, and lithium ions may effectively move.

The electrolyte may further comprise, in addition to the above-described components of the electrolyte, one or more additives for the purposes of improving life characteristics of the battery, suppressing capacity reduction of the battery, improving discharge capacity of the battery, and the like. Examples of such additives include haloalkylene carbonate compounds such as difluoroethylene carbonate, pyridine, triethyl phosphite, triethanolamine, cyclic ethers, ethylenediamine, n-glyme, hexaphosphoric triamide, nitrobenzene derivatives, sulfur, quinone imine dyes, N-substituted oxazolidinone, N,N-substituted imidazolidinone, ethylene glycol dialkyl ether, ammonium salts, pyrrole, 2-methoxy ethanol, and aluminum trichloride. The additive may be included in an amount of 0.1 wt% to 5 wt% based on the total weight of the electrolyte.

A lithium secondary battery including an electrode prepared using the carbon nanotube dispersion according to the present disclosure, specifically, a lithium secondary battery including a negative electrode prepared using the carbon nanotube dispersion, has carbon nanotubes uniformly dispersed in the negative electrode, and can stably exhibit excellent discharge capacity and output characteristics with a reduced content of conductive material compared to a case of including a conductive material such as conventional carbon black. As a result, it can be usefully used as a power source for medium- and large-sized devices, such as portable devices including mobile phones, notebook computers and digital cameras, and electric vehicles such as hybrid electric vehicles (HEVs).

Accordingly, in another embodiment of the present disclosure, there may be provided a lithium secondary battery, a battery module including the lithium secondary battery as a unit cell and a battery pack including the battery module.

The battery module or the battery pack may be used as a power source for one or more medium- and large-sized devices, such as power tools; electric vehicles (EV), including hybrid electric vehicles and plug-in hybrid electric vehicles (PHEV); or power storage systems.

Hereinafter, preferred Examples will be presented to aid understanding of the present disclosure, but the following Examples are provided only to facilitate understanding of the present disclosure, and the present disclosure is not limited thereto.

### [Embodiments]

### Examples (Preparation of Carbon Nanotube Dispersion)

### Example 1

A total of 500 g of a carbon nanotube dispersion was prepared by the following method. A first mixture was prepared by mixing polyvinylidene fluoride (PVdF) (Solef 5130 product of Solvay) as a first dispersant, Basic Red 2 (Sigma-Aldrich) as a second dispersant, and N-methyl-2-pyrrolidone (Daejung Chemicals & Metals) as a solvent. The first mixture was prepared by mounting an impeller and a container in a dissolver (CV4-PLUS product of VMA-Getzmann), adding the dispersant and the solvent, and stirring at 400 rpm for 10 minutes. Single-walled carbon nanotubes (SWCNT, BET specific surface area: 1,160 m²/g, diameter: 1-2 nm, length: 5 µm or more, TUBALL product of OCSiAl) were added to the prepared first mixture and stirred at 8,000 rpm for 60 minutes to prepare a second mixture. The prepared second mixture was homogenized ten times at a pressure of 20,000 psi using a high-pressure disperser (PICOMAX product of Micronox) to prepare a total of 500 g of a carbon nanotube dispersion. The prepared carbon nanotube dispersion included 0.8 wt% of single-walled carbon nanotubes, 1.2 wt% of polyvinylidene fluoride, and 0.4 wt% of Basic Red 2, and the remainder was composed of the solvent N-methyl-2-pyrrolidone.

### Example 2

A total of 500 g of a carbon nanotube dispersion was prepared in the same manner as in Example 1, except that the carbon nanotube dispersion was prepared to include 1.2 wt% of polyvinylidene fluoride-hexafluoropropylene copolymer (PVdF-co-HFP) as the first dispersant.

### Example 3

A total of 500 g of a carbon nanotube dispersion was prepared in the same manner as in Example 1, except that the carbon nanotube dispersion was prepared to include 0.6 wt% of Basic Red 2 as the second dispersant.

### Example 4

A total of 500 g of a carbon nanotube dispersion was prepared in the same manner as in Example 1, except that the carbon nanotube dispersion was prepared to include 1.6 wt% of polyvinylidene fluoride as the first dispersant.

### Example 5

A total of 500 g of a carbon nanotube dispersion was prepared in the same manner as in Example 1, except that the carbon nanotube dispersion was prepared to include 0.4 wt% of Basic Red 5 (Sigma-Aldrich) as the second dispersant.

### Comparative Example 1

A total of 500 g of a carbon nanotube dispersion was prepared in the same manner as in Example 1, except that the carbon nanotube dispersion was prepared to include 0.6 wt% of single-walled carbon nanotubes, 3 wt% of polyvinylidene fluoride-hexafluoropropylene copolymer as the first dispersant, and no second dispersant.

### Comparative Example 2

A total of 500 g of a carbon nanotube dispersion was prepared in the same manner as in Example 1, except that the carbon nanotube dispersion was prepared to include 0.6 wt% of single-walled carbon nanotubes, 2 wt% of polyvinylidene fluoride-hexafluoropropylene copolymer as the first dispersant, and 1 wt% of polyvinylpyrrolidone (PVP) as the second dispersant.

### Comparative Example 3

A total of 500 g of a carbon nanotube dispersion was prepared in the same manner as in Example 1, except that the carbon nanotube dispersion was prepared to include 1.5 wt% of polyvinylidene fluoride as the first dispersant and 0.1 wt% of Basic Red 2 as the second dispersant.

### Comparative Example 4

A total of 500 g of a carbon nanotube dispersion was prepared in the same manner as in Example 1, except that the carbon nanotube dispersion was prepared to include 0.8 wt% of polyvinylidene fluoride as the first dispersant and 0.8 wt% of Basic Red 2 as the second dispersant.

### Comparative Example 5

A total of 500 g of a carbon nanotube dispersion was prepared in the same manner as in Example 1, except that the carbon nanotube dispersion was prepared to include no first dispersant and 4 wt% of Basic Red 2 as the second dispersant.

### Experimental Example

### Experimental Example 1 (Evaluation of Viscosity)

The initial viscosity of the carbon nanotube dispersions prepared according to Examples 1 to 5 and Comparative Examples 1 to 5 was measured, and then the viscosity was measured after storage for 1 week, and the results are shown in Tables 1 and 2 below. The viscosity was measured for 3 minutes at 1 rpm at a temperature of 25°C using a viscometer (TV-25 product of TOKI SANGYO) with Rotor No. 1. In Tables 1 and 2 below, the viscosity increase rate is calculated by the following Equation 1. $Viscosity increase rate \left(%\right) = \left(B-A\right) / A \times 100$ where A is an initial viscosity (Pa·s) measured at 25°C and 1 rpm, and B is a viscosity (Pa·s) measured at 25°C and 1 rpm after standing at 25°C for 1 week.

**[Table 1]**

| | **Example 1** | **Example 2** | **Example 3** | **Example 4** | **Example 5** |
|---|---|---|---|---|---|
| Carbon nanotube (wt%) | SWCNT 0.8 | SWCNT 0.8 | SWCNT 0.8 | SWCNT 0.8 | SWCNT 0.8 |
| First dispersant (wt%) | PVdF 1.2 | PVdF-co-HFP 1.2 | PVdF 1.2 | PVdF 1.6 | PVdF 1.2 |
| Second dispersant (wt%) | Basic Red 2 0.4 | Basic Red 2 0.4 | Basic Red 2 0.6 | Basic Red 2 0.4 | Basic Red 5 0.4 |
| Initial viscosity (25°C, Pa·s) | 6.960 | 6.400 | 7.900 | 8.300 | 7.300 |
| Viscosity after 1 week (25°C, Pa·s) | 7.900 | 7.200 | 8.800 | 9.100 | 8.500 |
| Viscosity increase rate (%) | 14 | 13 | 11 | 10 | 16 |

**[Table 2]**

| | **Comp. Ex. 1** | **Comp. Ex. 2** | **Comp. Ex. 3** | **Comp. Ex. 4** | **Comp. Ex. 5** |
|---|---|---|---|---|---|
| Carbon nanotube (wt%) | SWCNT 0.6 | SWCNT 0.6 | SWCNT 0.8 | SWCNT 0.8 | SWCNT 0.8 |
| First dispersant (wt%) | PVdF-co-HFP 3 | PVdF-co-HFP 2 | PVdF 1.5 | PVdF 0.8 | - |
| Second dispersant (wt%) | - | PVP 1 | Basic Red 2 0.1 | Basic Red 2 0.8 | Basic Red 2 4 |
| Initial viscosity (25°C, Pa·s) | 11.000 | 10.900 | 13.700 | 14.300 | 10.200 |
| Viscosity after 1 week (25°C, Pa·s) | 16.400 | 13.000 | 18.200 | 19.300 | 17.800 |
| Viscosity increase rate (%) | 49 | 19 | 33 | 35 | 75 |

As shown in Tables 1 and 2, when dispersing carbon nanotubes, the vinyl-based polymers polyvinylidene fluoride and polyvinylidene fluoride-hexafluoropropylene copolymer (first dispersant), which are vinyl-based polymers including a halogen atom, can easily disperse carbon nanotubes when used in combination with Basic Red 2 or Basic Red 5 (second dispersant), which are cationic compounds including a pyrazine structure. Referring to Examples 1 to 4 and Comparative Examples 3 and 4, when the second dispersant is adjusted to 10 parts by weight to 90 parts by weight based on 100 parts by weight of the first dispersant in combination, the dispersion effect of the carbon nanotubes can be more excellent.

Simple modifications and changes of the present disclosure fall within the scope of the present disclosure, and the specific scope of protection of the present disclosure will be clarified by the appended claims.

## Claims

1. A carbon nanotube dispersion comprising:
carbon nanotubes;
a dispersant; and
a solvent,
wherein the dispersant includes a first dispersant including a vinyl-based polymer including a halogen atom, and a second dispersant including a cationic compound including a pyrazine structure.

2. The carbon nanotube dispersion according to claim 1,
wherein the cationic compound is a compound represented by the following Chemical Formula 1 or 2: 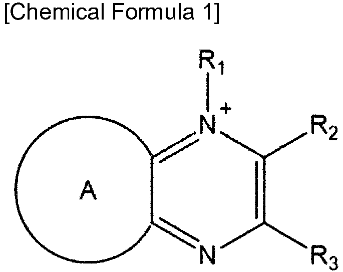 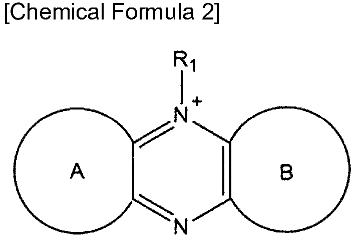
wherein in Chemical Formula 1 or 2,
Ring A and Ring B are same as or different from each other and are each independently a substituted or unsubstituted C6 to C20 aryl ring or a substituted or unsubstituted 6- to 20-membered heteroaryl ring,
R₁ is selected from the group consisting of hydrogen, a substituted or unsubstituted C1 to C10 alkyl group, a substituted or unsubstituted C1 to C10 alkenyl group, a substituted or unsubstituted C6 to C20 aryl group, and a substituted or unsubstituted 6- to 20-membered heteroaryl group, and
R₂ and R₃ are the same as or different from each other and are each independently selected from the group consisting of hydrogen, a halogen, a cyano group, a sulfonate group, a hydroxyl group, an amine group, a substituted or unsubstituted C1 to C10 alkyl group, a substituted or unsubstituted C1 to C10 alkenyl group, a substituted or unsubstituted C1 to C10 alkoxy group, a substituted or unsubstituted C6 to C20 aryl group, and a substituted or unsubstituted 6- to 20-membered heteroaryl group.

3. The carbon nanotube dispersion according to claim 1,
wherein the cationic compound is a compound represented by the following Chemical Formula 3: 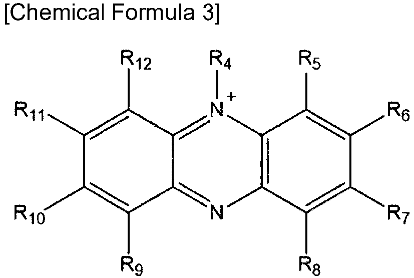
wherein in Chemical Formula 3,
R₄ is selected from the group consisting of hydrogen, a substituted or unsubstituted C1 to C10 alkyl group, a substituted or unsubstituted C1 to C10 alkenyl group, a substituted or unsubstituted C6 to C20 aryl group, and a substituted or unsubstituted 6- to 20-membered heteroaryl group, and
R₅ to R₁₂ are same as or different from each other and are each independently selected from the group consisting of hydrogen, a halogen, a cyano group, a sulfonate group, a hydroxyl group, an amine group, a substituted or unsubstituted C1 to C10 alkyl group, a substituted or unsubstituted C1 to C10 alkenyl group, a substituted or unsubstituted C1 to C10 alkoxy group, a substituted or unsubstituted C6 to C20 aryl group, and a substituted or unsubstituted 6- to 20-membered heteroaryl group.

4. The carbon nanotube dispersion according to claim 1,
wherein the cationic compound includes at least one amine group at a position capable of forming an iminium cation by electron transfer.

5. The carbon nanotube dispersion according to claim 1,
wherein the vinyl-based polymer is selected from the group consisting of polyvinyl fluoride, polyvinylidene fluoride, polyvinylidene fluoride-hexafluoropropylene copolymer, polytetrafluoroethylene, polyethylene tetrafluoroethylene, polychlorotrifluoroethylene, polyethylene chlorotrifluoroethylene, polyvinyl chloride and combinations thereof.

6. The carbon nanotube dispersion according to claim 1,
wherein the carbon nanotubes are included in an amount of 0.05 wt% to 5 wt% based on the total weight of the carbon nanotube dispersion.

7. The carbon nanotube dispersion according to claim 1,
wherein the first dispersant is included in an amount of 80 parts by weight to 450 parts by weight, based on 100 parts by weight of the carbon nanotubes, in the carbon nanotube dispersion.

8. The carbon nanotube dispersion according to claim 1,
wherein the second dispersant is included in an amount of 10 parts by weight to 150 parts by weight, based on 100 parts by weight of the carbon nanotubes, in the carbon nanotube dispersion.

9. The carbon nanotube dispersion according to claim 1,
wherein the second dispersant is included in an amount of 10 parts by weight to 90 parts by weight, based on 100 parts by weight of the first dispersant, in the carbon nanotube dispersion.

10. The carbon nanotube dispersion according to claim 1,
wherein the carbon nanotube dispersion has an initial viscosity of 10 Pa·s or less as measured at 25°C and 1 rpm.

11. The carbon nanotube dispersion according to claim 10,
wherein the carbon nanotube dispersion has a viscosity increase rate of 0.1% to 18%, calculated by the following Equation 1: $Viscosity increase rate \left(%\right) = \left(B-A\right) / A \times 100$
where A is an initial viscosity (Pa·s) measured at 25°C and 1 rpm, and B is a viscosity (Pa·s) measured at 25°C and 1 rpm after standing at 25°C for 1 week.

12. The carbon nanotube dispersion according to claim 1,
wherein the carbon nanotubes have a BET specific surface area of 800 m²/g to 5000 m²/g.

13. The carbon nanotube dispersion according to claim 1,
wherein the solvent includes a non-aqueous polar solvent.

14. A method for preparing the carbon nanotube dispersion according to claim 1, the method comprising:
(1) preparing a first mixture by mixing a first dispersant, a second dispersant and a solvent;
(2) preparing a second mixture by adding carbon nanotubes to the first mixture and mixing; and
(3) dispersing the second mixture.

15. The method for preparing the carbon nanotube dispersion according to claim 14,
wherein in Step (3), the second mixture is treated and dispersed 5 to 15 times at a pressure of 5,000 psi to 30,000 psi.
